# EUROPEAN PATENT APPLICATION

(11) **EP 3 656 893 A1**
(43) Date of publication of application: **27.05.2020**
(21) Application number: 17908207.8
(22) Date of filing: 02.06.2017
(51) Int. Cl.: C25B 15/02

(54) **OPERATING PROCEDURE FOR AN ELECTROLYSER PLANT SUPPLIED WITH RENEWABLE ENERGY**

(71) Applicant: H2B2 Electrolysis Technologies, S.L., 28010 Madrid (ES)
(72) Inventor: ROMERO DEL POZO, Marta, 28010 Madrid (ES); RODRÍGUEZ FERNÁNDEZ, Emilio Jesús, 28010 Madrid (ES); BREY SÁNCHEZ, José Javier, 28010 Madrid (ES); MESA VÉLEZ-BRACHO, Verónica, 28010 Madrid (ES)
(74) Representative: Monzón de la Flor, Luis Miguel
(86) International application number: PCT/ES2017/070398
(87) International publication number: WO 2018/202926

(57) **Abstract**

Method that aims to make an electrolysis plant work at the maximum yield point while homogenising the degradation of the electrolysers, which comprises the steps:
- Acquiring data on electrical consumption, temperature, voltage of each electrolyser cell and hydrogen production in the entire current range.
- The efficiency of each electrolyser is obtained at all of the operation points.
- Selecting the electrolyser with the highest efficiency for a given current density, assigning the start set point to said electrolyser, and then selecting another electrolyser with the second highest efficiency for said current density or increasing the production of the one in operation, and so on.

## Description

### PURPOSE OF THE INVENTION

The object of the present invention, as established in the title of the invention, is a method for operating an electrolysis plant powered by renewable energy.

The present invention is characterised by the operation of a plant at the optimum point for the electrolysers, finding the most efficient operation point of each electrolyser by obtaining the energy efficiency curve for each electrolyser.

The system described below manages to reduce operation and exploitation costs, and to homogenise the degradation of all the electrolysers comprising the plant.

Therefore, the present invention lies within the field of hydrogen production systems with electrolysers, and more specifically to that of plants in which the electrical power supply is obtained from renewable energy sources.

### BACKGROUND OF THE INVENTION

In general, hydrogen production plants with several electrolysers powered by renewable energy with grid power support are controlled in cascade, without considering the optimum operation point of each electrolyser of the plant. Each electrolyser works individually to its maximum operational point; when the selected electrolyser reaches its maximum operational point, the next electrolyser is started with the remaining available power.

Thus, the current control method used in plants does not provide the maximum yield point for the plant.

Moreover, the electrolysers are operated individually at their maximum operation point, there is a non-uniform degradation of each one. This is not ideal from the point of view of operation and maintenance.

The object of the present invention is therefore to provide an operational method for an electrolysis plant powered by renewable energy that overcomes the drawbacks of not working at the maximum yield point of the plant, the high operational costs and the non-uniformity of electrolyser degradation, developing a method as that described below, the essence of which is set out in claim one.

### DESCRIPTION OF THE INVENTION

The object of the present invention is a method for operating an electrolysis plant with electrolysers powered by renewable energy, which is therefore a variable power supply.

The control method is designed to select the most efficient operation point for each electrolyser.

The maximum efficiency point of each electrolyser depends on the hours of operation, the temperature and the current density of the electrolyser.

The control method is designed to select the point of maximum efficiency of each electrolyser considering the aforementioned variables.

The control method allows reducing operation costs and homogenising electrolyser degradation.

The aim of the control method is not only to make each electrolyser operate at its point of maximum efficiency, but also to know which electrolyser must be included in view of the maximum available power of the wind turbine such that plant efficiency is maximised.

The parameters that directly affect the degradation of an electrolyser are:
- Nominal current density. Efficiency starts increasing with current density and then starts falling until reaching the maximum operation point.
- Operation temperature. The efficiency of an electrolyser increases with temperature.
- Hours of operation. As the voltage in each cell increases with the number of hours of operation, the efficiency of the electrolyser falls.

Therefore, the steps of the method are:
- The yield of each electrolyser is calculated in view of the available power indicated by the wind turbine(s).
- The available power is distributed such that the maximum yield of the plant is obtained.

More specifically, the steps of the method are:
- Acquiring data on electrical consumption, temperature, voltage of each electrolyser cell and hydrogen production in the entire current range.
- The efficiency of each electrolyser is obtained at all of the operation points.
- Managing power consumption according to the point of maximum efficiency of each electrolyser, selecting the electrolyser with the highest efficiency for a given current density, assigning the start set point to said electrolyser, and then selecting another electrolyser with the second highest efficiency for said current density or increasing the production of the one in operation, and so on.

The entire process is repeated periodically, that is, obtaining data and obtaining the efficiency of each electrolyser, as these may change and after some time one electrolyser can become more efficient than another which was more efficient before. Thereby, the degradation of the electrolysers can be homogenised.

The control method improves the yield of the plant as a whole, reduces operation costs and homogenises the degradation of the electrolysers that conform the plant.

Unless indicated otherwise, all the technical and scientific elements used in this specification have the meaning usually understood by a person skilled in the art to which this invention belongs. In the practice of this invention, procedures and materials similar or equivalent to those described in the report can be used.

In the description and claims, the word "comprises", and its variants do not intend to exclude other technical characteristics, additives, components or steps. For persons skilled in the art, other objects, advantages and characteristics of the invention will be partly inferred from the description and partly from the practice of the invention.

### DESCRIPTION OF THE FIGURES

In order to complement the description being made and with the object of helping to better understand the characteristics of the invention, in accordance with a preferred practical embodiment thereof, said description is accompanied, as an integral part thereof, by a set of drawings where, in an illustrative and non-limiting manner, the following has been represented:
Figure 1 shows a view of the plant of electrolysers powered by renewable energy.
Figure 2 shows a graph indicating the relationship between efficiency and current density depending on the working temperature.
Figure 3 shows the relationship between cell voltage and current density depending on hours of operation.
Figure 4 shows the evolution of efficiency as a function of current density.

### PREFERRED EMBODIMENT OF THE INVENTION

In view of the figures, a preferred embodiment of the proposed invention is described below.

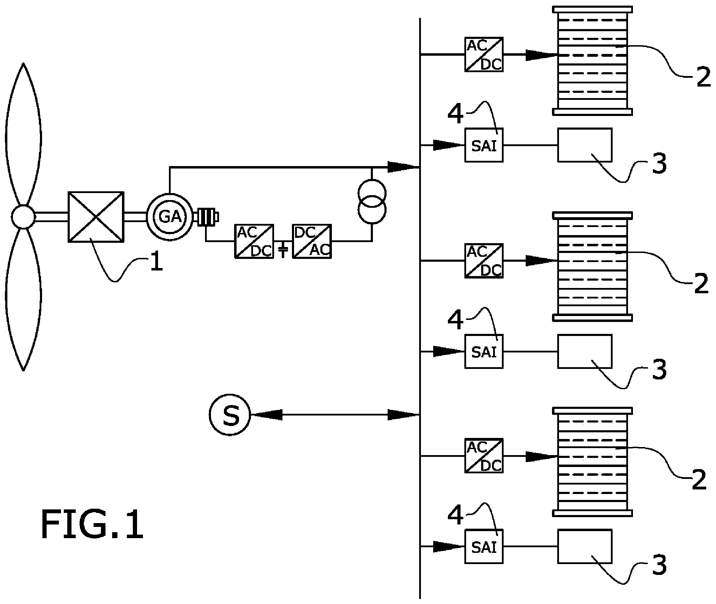

Figure 1 shows that the plant has one or several wind turbines (1), which can instead be any other renewable energy source or combination thereof, connected to a common connection point (CCP) to which are connected at least two electrolysers (2), each one having associated auxiliary equipment (3) which are necessary for the operation of the equipment, where said auxiliary equipment (3) is powered by the electrical grid.

The plant is not powered exclusively by renewable energy sources, and also has a connection to the electricity distribution grid (5).

The figure shows the following powers:
- The available power is the electric power generated by the wind turbines (1). The electrolysers will always consume all the available power from the wind turbines to make full use of the wind resources or whichever renewable source is used.
- The BoP power is the power required to feed the auxiliary equipment (3) of each electrolyser. This power depends on the point of operation of the electrolyser and is supplied by the grid.
- The electric power is the power consumed by each electrolyser (2) and is controlled by a monitored rectifier.
- The grid power is the power supplied to the auxiliary equipment of each electrolyser. In addition, the grid allows balancing the power flow when generation and consumption are not equal. This will occur in transients until generation and consumption are adjusted with the electrolysers. Transients occur due to changes in wind conditions or in consumption.

The plant has the following operation modes:
- Hibernation: All control equipment powered by the grid. All electrolysers are in hibernation mode at all times.
- Stand-by: consuming elements of the electrolyser auxiliary equipment (BoP) are powered by the grid and ready to generate hydrogen. There must always be one electrolyser in stand-by mode to ensure rapid response in case of changes in wind condition and therefore in available power.
- Production: the electrolyser is consuming electric power generated in the wind turbines. The minimum operation point of each electrolyser is 10% of maximum power.

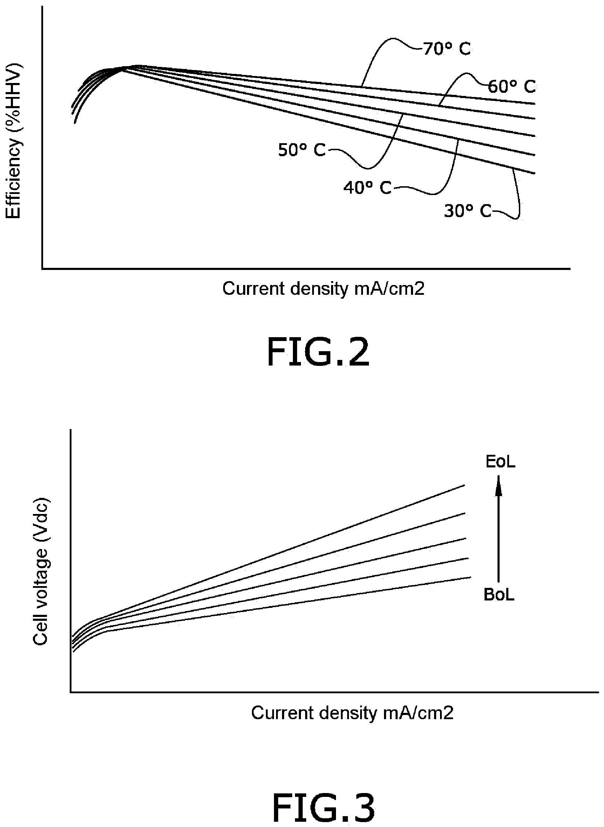

Figure 2 shows the variation in efficiency of each electrolyser with temperature and current density, noting that the efficiency increases until reaching a maximum value at approximately ¼ of the nominal current density of the electrolyser, and then starts falling, with a greater efficiency the higher the stack temperature.

Figure 3 shows how the cell voltage increases with operation hours.

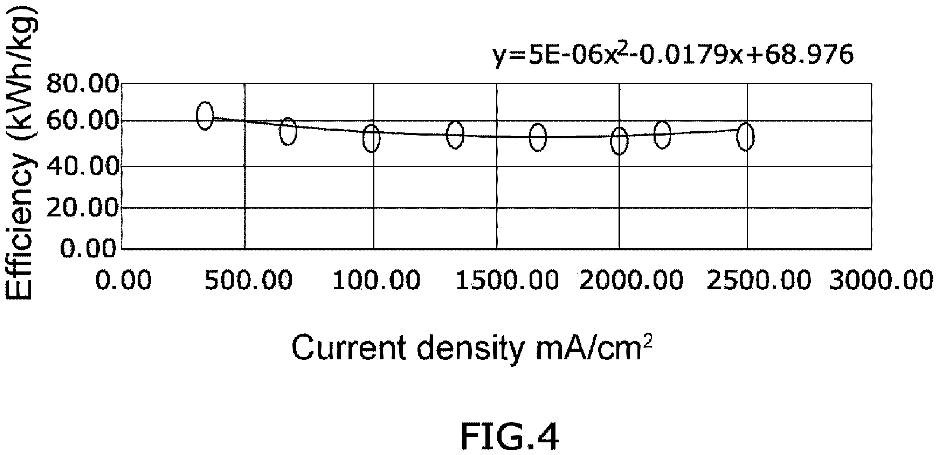

Figure 4 shows a graph of efficiency vs. current density, where it can be seen that in the case shown for a current density of approximately 75% of the maximum current, efficiency is maximum as consumption in Kwh/Kg is the minimum possible.

Having sufficiently described the nature of the present invention, in addition to the manner in which to put it into practice, it is hereby stated that, in its essence, it may be put into practice in other embodiments that differ in detail from that indicated by way of example, and to which the protection equally applies, provided that its main principle is not altered, changed or modified.

## Claims

1. Operation method for an electrolysis plant powered by renewable energy, **characterised by** comprising the steps:
- Acquiring data on electrical consumption, temperature, voltage of each electrolyser cell and hydrogen production in the entire current range.
- The efficiency of each electrolyser is obtained at all of the operation points.
- Managing power consumption according to the point of maximum efficiency of each electrolyser, selecting the electrolyser with the highest efficiency for a given current density, assigning the start set point to said electrolyser, and then selecting another electrolyser with the second highest efficiency for said current density or increasing the production of the one in operation, and so on.
